# EUROPÄISCHE PATENTSCHRIFT

(11) **EP 0 484 716 B1**
(45) Veröffentlichungstag und Bekanntmachung des Hinweises auf die Patenterteilung: **13.01.1999**
(21) Anmeldenummer: 91117803.6
(22) Anmeldetag: 18.10.1991
(51) Int. Cl.: G01P 3/481, H02N 11/00

(54) **Elektromagnetischer Geber zur Bestimmung der Drehzahl und/oder Drehrichtung eines Rotors**
Electromagnetic sensor for determining the rotational speed and/or direction of a rotor
Capteur électromagnétique pour déterminer la vitesse et/ou la direction de rotation d'un rotor

(30) Priorität: 09.11.1990 DE 4035603
(43) Veröffentlichungstag der Anmeldung: 13.05.1992
(73) Patentinhaber: SIEMENS AKTIENGESELLSCHAFT, 80333 München (DE)
(72) Erfinder: Zimmer, Rainer, Dipl.-Ing., W-6072 Dreiech (DE); Preusse, Norbert, Dr., W-8755 Alzenau (DE)

(56) Entgegenhaltungen:
- WO-A-83/01354
- DE-A- 3 621 778
- GB-A- 2 074 389
- GB-A- 2 125 970
- US-A- 4 453 420
- US-A- 4 783 609

## Beschreibung

Die Erfindung betrifft einen elektromagnetischen Geber zur Bestimmung der Drehzahl und/oder Drehrichtung eines Rotors mit mindestens einem an dem Rotor angebrachten Dauermagneten und mit mindestens einem überwiegend in radialer Richtung neben dem Rotor angeordneten bistabilen magnetischen Schaltelement mit zugehöriger Sensorspule, das sprungartig in einem großen Barkhausensprung ummagnetisierbar ist.

Bistabile magnetische Schaltelemente sind beispielsweise unter den Bezeichnungen Wiegand- und Impulsdrahtsensor bekannt und u. a. in einem Beitrag von G. Rauscher und C. Radeloff in dem von R. Boll und K.-J. Overshott herausgegebenen Buch "Magnetic Sensors", Weinheim, 1989, beschrieben. Wiegand- und Impulsdrahtsensoren können in einer Sensorspule Spannungsimpulse bis zu etwa 3 V in 1000 Windungen induzieren, wenn beim Ummagnetisieren eine definierte Feldstärkenschwelle überschritten wird. Die Spannungsamplitude ist dabei weitgehend unabhängig von der Feldänderungsrate des wirkenden Magnetfeldes. Der magnetische Schalteffekt beruht hierbei auf großen reproduzierbaren Barkhausensprüngen in zugbelasteten ferromagnetischen Drähten. Bei Wiegand-Drähten wird durch Tordieren und Dehnen die Mantel zone des Drahtes plastisch verformt und in ihr eine Koerzitivfeldstärke von ca. 30 A/cm eingestellt, während der Kern unter elastische Spannungen kommt und dessen Koerzitivfeldstärke etwa 10 bis 20 A/cm beträgt. Der Wiegand-Draht besteht somit im wesentlichen aus einem magnetisch härteren Mantel, der den magnetisch weicheren Kern unter Zugspannung bringt.

Im Gegensatz zu den Wiegand-Drähten handelt es sich bei den Impulsdrähten um Verbunddrähte aus zwei unterschiedlichen Legierungen, bei denen der Mantel den Schaltkern unter Zugspannung setzt und gegebenenfalls gleichzeitig eine Dauermagnetfunktion übernehmen kann. Um die erforderlichen Spannungen zu erzielen, können beispielsweise Legierungen mit unterschiedlichen thermischen Ausdehnungskoeffizienten verwendet werden. Zudem ist es möglich, durch einmaliges Dehnen des Drahtes den Schaltkern unter Zugspannung zu bringen, indem der Mantel über die Elastizitätsgrenze hinaus beansprucht wird, während der Kern im elastischen Bereich verbleibt.

Aus GB-A-2074389 ist es dazu bekannt, einen magnetfeldabhängigen Sensor als Schaltelement fest neben einer rotierenden Welle anzuordnen, wobei an der Welle mindestens ein Dauermagnet angebracht ist. Hier sind Stabmagnete mit ihrer Längsrichtung parallel zur Drehachse des Rotors angebracht, so daß durch das variierende Feld beim Drehen der Welle ein Schalten und Rücksetzen des Sensors erfolgt.

In einer Anordnung nach WO-A-83/01354 sowie in DE-A-3621778 sind Anordnungen beschrieben, bei denen das magnetfeldabhängige bistabile Schaltelement in radialer Richtung neben einem Rotor angeordnet ist und bei denen der Rotor in radialer Richtung aufmagnetisierte Magnete trägt. Hier wird beim Vorbeiführen der einzelnen Magnete das Schaltelement abwechselnd schalten bzw. zurückgesetzt werden. Die durch das Schaltelement erzielten Spannungsimpulse sind jedoch unabhängig von der Drehrichtung des Rotors.

Der Erfindung liegt daher die Aufgabe zugrunde, einen Geber zu schaffen, bei der neben der Bestimmung der Drehzahl des Rotors auch eine Aussage über die Drehrichtung getroffen werden kann.

Diese Aufgabe wird durch die in Anspruch 1 beanspruchte Vorrichtung gelöst.

Durch die erfindungsgemäße Anordnung ist ein separater Rücksetzmagnet nicht erforderlich. Durch den hinreichend kleinen Abstand zwischen dem vorbeigeführten Dauermagneten und dem bistabilen magnetischen Schaltelement wird gemäß der Erfindung erreicht, daß das Schaltelement nur bei einer Drehrichtung des Rotors sprungartig in einem großen Barkhausensprung ummagnetisiert wird. Die Ursache für diese Drehrichtungsabhängigkeit liegt im Verlauf des Streufeldes des Dauermagneten begründet. Erfolgt beispielsweise bei geeigneter Polung des Dauermagneten bei einer Drehung entgegen dem Uhrzeigersinn eine Ummagnetisierung des Schaltelements in einem großen Barkhausensprung so erfolgt beim Entfernen des Dauermagneten das Rücksetzen. Wird die Drehrichtung umgekehrt, so wird das Schaltelement zuerst zurückgesetzt. Anschließend müßte bei Umkehr des Streufeldes am Sensorort ein Schalten in einem großen Barkhausensprung erfolgen. Da sich aber in diesem Fall bei hinreichend geringem Abstand zwischen Magnet und Schaltelement das Ansteuerfeld im Vergleich zur Drehung gegen den Uhrzeigersinn sehr stark ändert und deshalb im Bereich des Schaltelementes inhomogen ist, erfolgt die für das Schalten notwendige sprungartige Ummagnetisierung des Sensors nicht oder nur unzureichend. Dieser Effekt verschwindet zunehmend mit größerem Abstand zwischen Magnet und Schaltelement, da dann das Ansteuerfeld homogener wird.

Besonders vorteilhaft ist es, wenn mehrere Dauermagnete vorgesehen sind, von denen jeder zur Auslösung eines Barkhausensprungs und zur Rücksetzung des Schaltelementes dient, da dann eine wesentliche Verbesserung der Auflösung erzielt wird. Als Schaltelement kommen insbesondere die an sich bekannten Impulsdrähte infrage, wobei eine Ausführung bevorzugt wird, bei der dem Impulsdraht ein Dauermagnet beigelegt ist. Durch die Verwendung von mindestens zwei Schaltelementen kann eine drehrichtungsabhängige Drehzahlerfassung durchgeführt werden. Vorteilhafterweise weisen die beiden bistabilen magnetischen Schaltelemente dann die gleiche Ausrichtung auf. Handelt es sich bei den Schaltelementen um Impulsdrähte mit beigelegten Dauermagneten, so müssen die beigelegten Dauermagnete in diesem Fall entgegengesetzte Magnetisierungsrichtungen aufweisen. Werden zwei Schaltelemente eingesetzt, so können sie insbesondere auch eine gemeinsame Sensorspule aufweisen. Weiterhin kann durch das Anbringen eines ferromagnetischen Teils in der Verlängerung der Sensorachse das Streufeld des Dauermagneten im Bereich des Schaltelements homogenisiert werden. Hierdurch läßt sich die Impulsspannung steigern. Zudem vergrößert sich hierdurch der Abstandsbereich, in dem die Drehrichtungsabhängigkeit auftritt.

Anhand der Zeichnungen und der Ausführungsbeispiele wird die Erfindung im folgenden näher erläutert. Es zeigen:
- Fig. 1: den prinzipiellen Aufbau eines Impulsdrahtsensors;
- Fig. 2: den typischen Verlauf eines Schaltimpulses;
- Fig. 3: einen erfindungsgemäßen Geber;
- Fig. 4: einen weiteren erfindungsgemäßen Geber;
- Fig. 5: eine erfindungsgemäße Anordnung sowie den Verlauf und die Inhomogenität des Magnetfeldes am Sensorort;
- Fig. 6: eine erfindungsgemäße Verschaltung von zwei Sensorelementen;
- Fig. 7: eine erfindungsgemäße Verschaltung von zwei Sensorelementen mit gemeinsamer Spule.

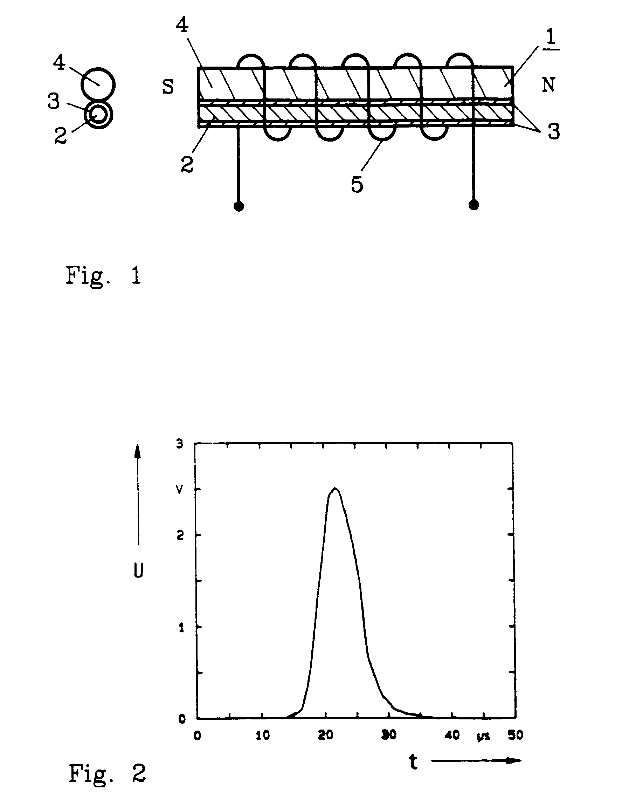

Fig. 1 zeigt den prinzipiellen Aufbau eines bistabilen magnetischen Schaltelementes (Sensor) 1 in Form eines sogenannten Impulsdrahtsensors, wie er von der Vacuumschmelze GmbH bezogen werden kann. Der Impulsdraht nach dieser bevorzugten Ausführungsform beinhaltet einen verspannten Verbundkörper, der aus einem weichmagnetischen Kern 2 und einer äußeren Hülle 3 besteht. Der magnetisch wirksame Teil des Verbundkörpers ist der Kern 2. Als Material hierfür wird beispielsweise eine CoFe-Legierung mit hoher Magnetostriktion verwendet. Durch Anisotropien, wie sie zum Beispiel durch mechanische Spannungen entstehen, wird erreicht, daß eine sprungartige Ummagnetisierung des weichmagnetischen Materials erfolgt. Das Verbundelement weist daher eine Hülle 3 aus einem Material mit einer niedrigeren Streckgrenze und Festigkeit auf. Durch einen Dehnprozess tritt in der Hülle 3 eine plastische Verformung auf, während der Kern 2 noch im elastischen Bereich liegt. Die bleibenden Deformationen setzen den Kern 2 unter Zugspannungen und bewirken das Schaltverhalten in einem großen Barkhausensprung. Bei der Verwendung des Sensors in Gebern zur Bestimmung der Drehzahl und / oder Drehrichtung werden Längen des Impulsdrahtsensors von nur 10 bis 20 mm bevorzugt. Bei solch kurzen Verbunddrähten bilden sich an den Drahtenden magnetische Abschlußbezirke, die die schnelle sprungartige Ummagnetisierung des Verbunddrahtes behindern können. Um dies zu vermeiden, wird daher vorteilhafterweise parallel zu dem Verbundkörper ein gleich langer Dauermagnetdraht 4 angebracht. Der Verbundkörper ist weiterhin von einer Spule 5 umgeben, in der durch die sprungartige Ummagnetisierung eine Spannung induziert wird. Fig. 2 zeigt einen typischen Impulsverlauf. Die Impulsrate kann in einer nachfolgenden an sich bekannten Schaltung zur Bestimmung der Drehzahl und/oder Drehrichtung herangezogen werden. Der Schaltimpuls wird bei den kommerziell erhältlichen Impulsdrähten beispielsweise bei einem äußeren Magnetfeld von etwa 20 A/cm ausgelöst. Die Richtung des Magnetfeldes muß dabei entgegengesetzt zu dem Feld des im Sensorelement integrierten Magneten 4 orientiert sein. Das Rücksetzen des Sensorelementes erfolgt durch ein äußeres Magnetfeld, das parallel zum Feld des beigelegten Dauermagneten 4 gerichtet ist.

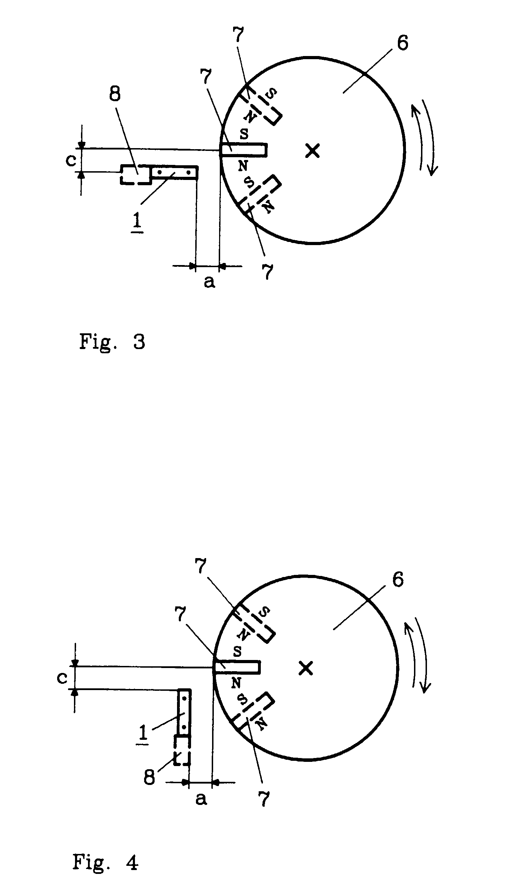

In den Fig. 3 und 4 sind erfindungsgemäße Anordnungen eines Gebers zur Bestimmung der Drehzahl oder Drehrichtung dargestellt. Auf einer Welle 6 sind Dauermagnete 7 versetzt zur Achse des Rotors so angebracht, daß beide Magnetpole in Umfangsrichtung des Rotors 6 nebeneinander angeordnet sind. Radial neben dem Rotor 6 ist das Schaltelement 1 beispielsweise in Form eines Impulsdrahtsensors angeordnet. Zur Homogenisierung des von den Magneten erzeugten Streufeldes am Sensorort kann axial neben dem Impulsdrahtsensor ein ferromagnetisches Teil 8 vorgesehen sein.

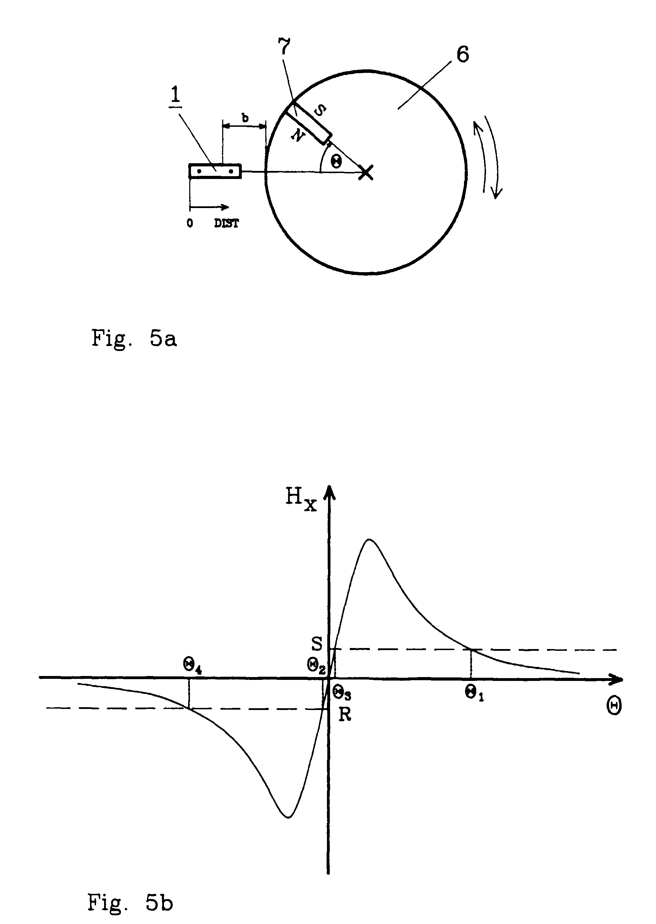

Zur Verdeutlichung der Funktionsweise ist in Fig. 5a noch einmal schematisch eine vereinfachte Anordnung mit nur einem Dauermagneten 7 dargestellt, der an dem Rotor 6 befestigt ist. Radial neben dem Rotor 6 befindet sich das Schaltelement 1, dessen Achsenverlängerung sich hier mit der Drehachse des Rotors unter einem rechten Winkel schneidet. In Fig. 5a ist ferner der Winkel θ eingezeichnet, der sich aus der Verlängerung der Achse des Schaltelementes und der Verbindungslinie zwischen Magnet 7 und der Rotorachse ergibt.

In Fig. 5b ist der Verlauf des von dem Magneten 7 am Ort des Schaltelementes 1 erzeugten Magnetkomponente in Richtung der Schaltelementachse für einen beliebig gewählten Abstand b zum Dauermagneten qualitativ dargestellt. Bei Annäherung des Magneten 7 an das Schaltelement 1 steigt zunächst dieses Magnetfeld an. Bei Überschreiten der Schaltfeldstärke S wird das Schaltelement 1 in einem großen Barkhausensprung ummagnetisiert, und es entsteht ein Impuls in der Spule 5. Dies geschieht bei dem in Fig. 5b dargestellten Winkel θ1. Bei weiterer Annäherung des Dauermagneten 7 an das Schaltelement 1 durchläuft das Magnetfeld am Sensorort ein Maximum und fällt schließlich bis auf den Wert Null ab, der dann erreicht ist, wenn sich der Dauermagnet symmetrisch zur Verlängerung der Achse des Schaltelementes befindet. Bei weiterer Drehung des Rotors 6, wird der Magnet 7 wieder von dem Schaltelement 1 entfernt. Das Magnetfeld am Sensorort steigt dann betragsmäßig wieder an, allerdings weist das Feld nun eine Vorzeichenumkehr auf. Somit kann bei Überschreiten der Rücksetzfeldstärke R beim Winkel θ2 ein Rücksetzen des Schaltelementes durch den gleichen Magneten erfolgen.

Bei Umkehrung der Drehrichtung läuft der gesamte Vorgang im Prinzip in umgekehrter Reihenfolge ab. Bei Erreichen der Rücksetzfeldstärke R unter dem Winkel θ4 erfolgt zunächst ein Rücksetzen des Schaltelementes. Die Schaltfeldstärke S wird bei dieser Umkehrung der Drehrichtung dann aber bereits bei dem Winkel θ3 erreicht, der wesentlich kleiner ist, als der Winkel θ1. Bei hinreichend großem geringsten radialen Abstand a (vgl. Fig. 3 und 4) zwischen Schaltelement 1 und Dauermagnet 7 bzw. bei hinreichend schwachem Dauermagnet 7 erfolgt in diesem Falle ebenfalls eine Ummagnetisierung des Schaltelementes 1 in einem großen Barkhausensprung, und es wird ein Spannungsimpuls in der Spule 5 induziert. Bei hinreichend kleinem geringsten radialen Abstand a zwischen Schaltelement 1 und Dauermagnet 7 bzw. bei hinreichend starkem Dauermagnet 7 ist das Magnetfeld über die Länge des Schaltelementes bei kleinen Winkeln θ aber so inhomogen, daß die Schaltfeldstärke in einzelnen Bereichen des Schaltelementes 1 bereits erreicht wird und in anderen noch nicht. Es erfolgt dann zwar ein Schalten des Schaltelementes 1, jedoch nicht in einem großen Barkhausensprung.

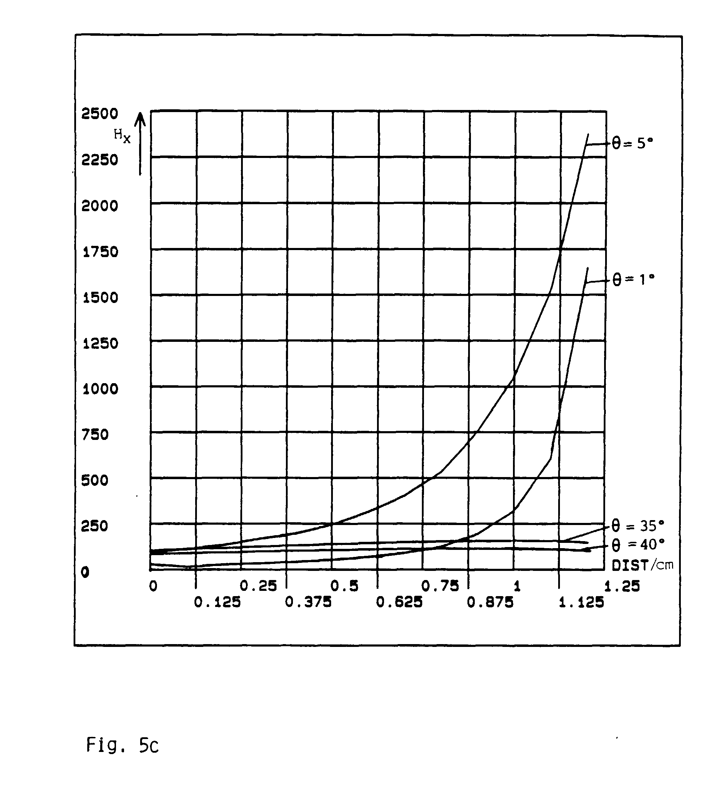

In Fig. 5c ist hierzu beispielhaft die Stärke des Magnetfeldes in Richtung der Sensorachse über die Sensorlänge für einige Winkel θ aufgetragen. Wie daraus zu ersehen ist, ist bei kleinen Winkeln von beispielsweise θ = 1° oder θ = 5° die Inhomogenität des Feldes über die Sensorlänge beachtlich, während sie für größere Winkel von beispielsweise θ = 35° oder 40° nahezu vernachlässigbar ist.

In einer speziellen Ausführungsform wurde ein Geber zur Bestimmung der Drehzahl und/oder Drehrichtung realisiert, bei dem als Schaltelement 1 ein Impulsdrahtsensorelement des Typs MSE 580/002 der Vacuumschmelze GmbH sowie Magnete des Typs VACODYM VD370 HR mit den Abmessungen 10 x 10 x 3 mm des gleichen Herstellers verwendet wurden. Die höchsten Impulsspannungswerte ergaben sich bei Positionierung des Sensorelementes in vertikaler Richtung in einem Abstand c von etwa 0 bis 2 mm unterhalb der Drehachse des Rotors 6. Mit dieser Anordnung wurden bei Umkehr der Drehrichtung entweder keine Impulse oder lediglich Impulse mit kleiner Amplitude registriert. Erst mit zunehmendem Abstand zwischen Magnet und Sensorelement glichen sich die Impulshöhen in beiden Drehrichtungen an. Mit einer Anordnung, wie sie in Fig. 3 dargestellt ist, ist bei Verwendung der obengenannten Sensorelemente und Dauermagnete eine Drehrichtungserkennung möglich, wenn der geringste radiale Abstand a zwischen Sensorelement und Dauermagnet weniger als 10 mm, vorzugsweise 1 bis 7 mm beträgt. Bei einer Anordnung gemäß Fig. 4 liegt der optimale geringste radiale Abstand a zur Drehrichtungserkennung bei Verwendung der obengenannten Sensorelemente und Dauermagnete bei ca. 3 bis 6 mm. In beiden Fällen konnten in der Sensorspule Impulsspannungen von etwa 2 bis nahezu 4 V erreicht werden.

Eine weitere Steigerung der Impulsspannung konnte durch ein axial neben dem Schaltelement 1 angeordnetes ferromagnetisches Teil erreicht werden. Mit einem ferromagnetischen Teil der Abmessungen 12 x 4 x 6,5 mm wurde eine Steigerung der Impulsspannung um ca. 0,5 bis 0,8 V erzielt. Durch dieses ferromagnetische Teil wurde zudem eine Ausdehnung des Abstandsbereichs, in dem eine Drehrichtungserkennung möglich ist, auf nahezu den gesamten Bereich erreicht, in dem Impulse überhaupt ausgelöst werden können.

Im Falle einer Anordnung mit Drehrichtungserkennung ist es bei Verwendung lediglich eines Schaltelementes in der Regel nur möglich, die Drehzahl in einer Drehrichtung zu erfassen. Gegebenenfalls kann aber dann auch aus der unterschiedlichen Höhe der Impulse bei verschiedenen Drehrichtungen eine Drehzahl- und Drehrichtungserkennung vorgenommen werden. Soll die Drehzahl bei Drehrichtungserkennung für beide Drehrichtungen bestimmt werden, so ist es jedoch vorteilhaft, ein weiteres Schaltelement einzusetzen. Handelt es sich hierbei um einen Impulsdrahtsensor mit beigelegtem Dauermagneten, so muß der darin enthaltene Magnet entgegengesetzt zum Magneten des ersten Impulsdrahtsensors aufmagnetisiert sein.

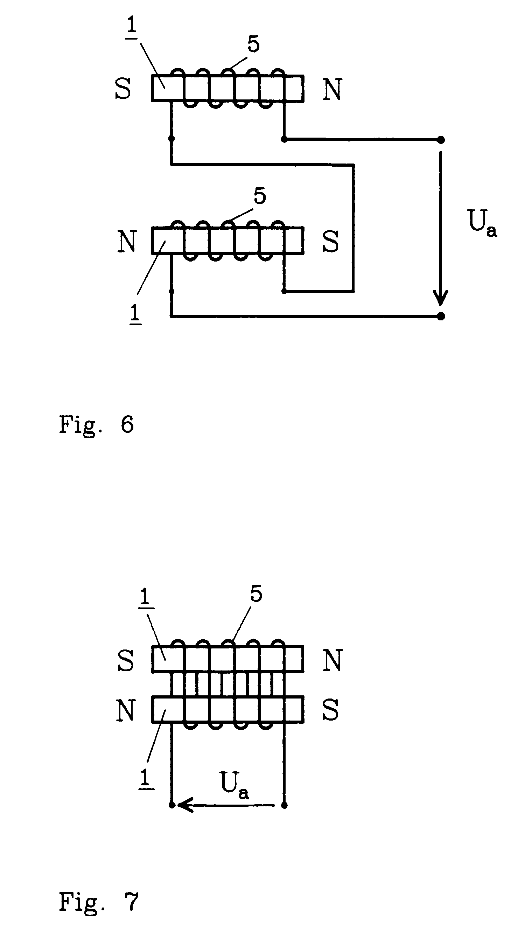

In Fig. 6 und 7 sind entsprechende Verschaltungen für zwei Sensorelemente dargestellt. Bei der Ausgestaltung nach Fig. 6 sind die Spulen 5 der Schaltelemente 1 in Reihe geschaltet. Diese Anordnung benötigt lediglich zwei Anschlußleitungen. Die Drehrichtung ist hierbei am Vorzeichen der Spannungsimpulse zu erkennen. Bei der Ausgestaltung nach Fig. 7 ist den beiden Impulsdrahtsensorelementen eine gemeinsame Sensorspule 5 zugeordnet. Hierdurch ergibt sich eine besonders kompakte Bauweise.

## Patentansprüche

1. Vorrichtung zur Bestimmung der Drehzahl und/oder Drehrichtung eines Rotors (6) mit mindestens einem an dem Rotor (6) angebrachten Dauermagneten (7) und mit mindestens einem überwiegend in radialer Richtung neben dem Rotor angeordneten bistabilen magnetischen Schaltelement (1) mit zugehöriger Sensorspule (5), das in einer vorgegebenen Drehrichtung des Rotors sprungartig in einem großen Barkhausensprung ummagnetisierbar ist,
**dadurch gekennzeichnet,**
daß der Dauermagnet (7) versetzt zur Achse des Rotors (6) und so angebracht ist, daß seine beiden Magnetpole in Umfangsrichtung des Rotors (6) voneinander beabstandet sind, derart, daß durch den am Schaltelement (1) vorbeigeführten Dauermagneten (7) die Setzfeldstärke (S in Figur 5b) zum Auslösen des Barkhausensprungs und die Rücksetzfeldstärke (R in Figur 5b) zum Rücksetzen des Schalelementes (1) je einmal überschritten wird, und daß die Entfernung des Schaltelementes (1) vom Rotor (6) so gering gewählt ist, daß sich bei Umkehrung der vorgegebenen Drehrichtung längs des Schaltelementes (1) eine so inhomogene magnetische Feldstärke ergibt, daß das Schaltelement nicht in einem großen Barkhausensprung ummagnetisierbar ist, so daß sich abhängig von der Drehrichtung des Rotors (6) unterschiedlich hohe Spannungsimpulse ergeben, die zur Drehrichtungserkennung auswertbar sind.

2. Vorrichtung nach Anspruch 1,
**dadurch gekennzeichnet,**
daß mindestens zwei bistabile magnetische Schaltelemente (1) vorgesehen sind, die die gleiche Ausrichtung haben und daß beiden Schaltelementen (1) Dauermagnete (4) beigelegt sind, die entgegengesetzte Magnetisierungsrichtungen aufweisen.

3. Vorrichtung nach Anspruch 2,
**dadurch gekennzeichnet,**
daß die Sensorspulen (5) der beiden bistabilen magnetischen Schaltelemente (1) elektrisch in Reihe geschaltet sind.

4. Vorrichtung nach Anspruch 2,
**dadurch gekennzeichnet,**
daß den beiden bistabilen magnetischen Schaltelementen (1) eine gemeinsame Sensorspule (5) zugeordnet ist.

## Claims

1. Device for determining the rotational speed and/or direction of a rotor (6), having at least one permanent magnet (7), which is fitted to the rotor (6), and at least one bistable magnetic switching element (1), which is arranged alongside the rotor, predominantly in the radial direction, has an associated sensor coil (5) and, in a predefined direction of rotation of the rotor, is capable of being re-magnetized abruptly in a large Barkhausen jump, characterized in that the permanent magnet (7) is fitted so that it is offset with respect to the axis of the rotor (6) and so that its two magnetic poles are spaced apart from each other in the circumferential direction of the rotor (6) in such a way that, as a result of the permanent magnet (7) being led past the switching element (1), the setting field strength (S in Figure 5b) for triggering the Barkhausen jump and the resetting field strength (R in Figure 5b) for resetting the switching element (1) are each exceeded once, and in such a way that the distance between the switching element (1) and the rotor (6) is chosen to be so small that, when the predefined direction of rotation is reversed, the result is a magnetic field strength, along the length of the switching element (1), which is so inhomogeneous that the switching element cannot be re-magnetized in a large Barkhausen jump, so that, depending on the direction of rotation of the rotor (6), the result is voltage pulses of different levels, which can be evaluated in order to detect the direction of rotation.

2. Device according to Claim 1, characterized in that at least two bistable magnetic switching elements (1) are provided, these having the same alignment, and in that permanent magnets (4) which have opposed directions of magnetization are placed beside the two switching elements (1).

3. Device according to Claim 2, characterized in that the sensor coils (5) of the two bistable magnetic switching elements (1) are connected electrically in series.

4. Device according to Claim 2, characterized in that a common sensor coil (5) is assigned to the two bistable magnetic switching elements (1).

## Revendications

1. Dispositif pour déterminer la vitesse et/ou la direction de rotation d'un rotor (6) comportant au moins un aimant permanent (7) monté sur le rotor (6) et au moins un élément de circuit (1) magnétique bistable disposé essentiellement en direction radiale à côté du rotor, équipé d'une bobine de capteur (5) afférente, et dont l'aimantation peut être inversée par à-coup par un effet puissant de Barkhausen dans une direction de rotation donnée du rotor,
**caractérisé en ce que**
l'aimant permanent (7) est monté avec un décalage par rapport à l'axe du rotor (6) de sorte que ses deux pôles magnétiques soient espacés l'un de l'autre dans la direction circonférentielle du rotor (6), de telle sorte que par l'intermédiaire de l'aimant permanent (7) passé à côté de l'élément de circuit (1), l'intensité de champ (S à la figure 5b) pour le déclenchement de l'effet de Barkhausen et l'intensité de champ de réinitialisation (R à la figure 5b) pour la réinitialisation de l'élément de circuit (1) sont chacune dépassées une fois, et en ce que la distance de l'élément de circuit (1) du rotor (6) est choisie si faible qu'en cas d'inversion de la direction de rotation donnée le long de l'élément de circuit (1), il en résulte une intensité de champ magnétique si peu homogène que l'aimantation de l'élément de circuit ne peut pas être inversée par un effet puissant de Barkhausen, si bien qu'il en résulte des impulsions de tension de hauteurs différentes en fonction de la direction de rotation du rotor (6), qui peuvent être évaluées pour la détection de la direction de la rotation.

2. Dispositif selon la revendication 1,
**caractérisé en ce que**
au moins deux éléments de circuit magnétique bistables (1), qui ont la même orientation, sont prévus, et en ce que des aimants permanents (4), qui présentent des directions d'aimantation opposées, sont joints à ces deux éléments de circuit (1).

3. Dispositif selon la revendication 2,
**caractérisé en ce que**
les bobines de capteur (5) des deux éléments de circuit magnétiques bistables (1) sont montées en série électriquement.

4. Dispositif selon la revendication 2,
**caractérisé en ce que**
une bobine de capteur commune (5) est affectée aux deux éléments de circuit magnétiques bistables (1).
